# FASCICULE DE BREVET EUROPEEN

(11) **EP 1 840 107 B1**
(45) Date de publication et mention de la délivrance du brevet: **03.06.2009**
(21) Numéro de dépôt: 06111850.1
(22) Date de dépôt: 28.03.2006
(51) Int. Cl.: C04B 41/80, G04B 37/22, A44C 27/00

(54) **Procédé de décoration d'une pièce en céramique**
Verfahren zum Dekorieren eines Keramikteils
Process for decorating a ceramic part

(43) Date de publication de la demande: 03.10.2007
(73) Titulaire: Comadur S.A., 2400 Le Locle (CH)
(72) Inventeur: Besson, François, 1420, Fiez (CH); Boucard, Sylvain, 25130, Villers-le-lac (FR)
(74) Mandataire: Ravenel, Thierry Gérard Louis

(56) Documents cités:
- EP-A- 0 741 117
- EP-A- 0 850 900
- EP-A- 1 160 224
- STOLZ B ET AL: "Laser-induced writing of electrically conductive structures in the surface of AIN" PROCEEDINGS OF THE SPIE - THE INTERNATIONAL SOCIETY FOR OPTICAL ENGINEERING SPIE-INT. SOC. OPT. ENG USA, vol. 3675, 1999, pages 190-201, XP002391098 ISSN: 0277-786X
- GAKOVIC B M ET AL: "TEA CO2 laser surface modification of titanium ceramic thin films" PROCEEDINGS OF THE SPIE - THE INTERNATIONAL SOCIETY FOR OPTICAL ENGINEERING SPIE-INT. SOC. OPT. ENG USA, vol. 4760, 2002, pages 1006-1013, XP002391099 ISSN: 0277-786X

## Description

L'invention se rapporte au domaine de la microtechnique. Elle concerne plus particulièrement un procédé de coloration locale d'une pièce en céramique.

Les céramiques telles que la zircone ZrO2 ou l'alumine Al2O3 sont largement employées en horlogerie pour la réalisation de boîtes et de bracelets inrayables. La couleur de la zircone pure ou de l'alumine pure est un blanc laiteux qui trouve peu d'applications en horlogerie.

Des procédés de coloration de la zircone sont déjà couramment utilisés par les fabricants de céramiques. Ils consistent généralement à introduire dans le mélange de base de l'oxyde de zirconium, préalablement à une étape d'injection, un pigment ou un oxyde à l'état poudreux. Toutefois, ce type de procédé ne permet pas la réalisation de motifs sur des pièces en céramique, puisque celle-ci est colorée dans sa masse.

Par ailleurs, un procédé de coloration locale d'un oxyde de zirconium est divulgué dans la demande EP 0 741 117. Ce procédé consiste à illuminer la surface d'une pièce en oxyde de zirconium, suffisamment longtemps pour obtenir un changement de coloration du blanc laiteux au noir. Il permet la formation d'une image, mais le contraste obtenu, noir sur blanc laiteux, est très fort et inesthétique.

L'invention propose un procédé de coloration locale d'une pièce en céramique, permettant la réalisation de motifs en surface.

Plus précisément l'invention concerne un procédé de coloration locale d'une pièce comportant au moins une couche superficielle sensiblement stoechiométrique d'une céramique choisie parmi les carbures et les nitrures métalliques comportant principalement les étapes suivantes ;
- se munir d'un support pour la pièce et d'un laser, dotés d'un mouvement relatif l'un par rapport à l'autre dans un plan XY,
- illuminer localement la pièce avec le faisceau laser de façon à apporter suffisamment d'énergie pour provoquer un changement local de coloration par modification de la stoechiométrie de la couche superficielle, et
- balayer la surface de la pièce à l'aide du faisceau laser de manière à former un motif déterminé.

D'autres caractéristiques apparaîtront plus clairement à la lecture de la description qui suit d'un exemple de mise en oeuvre du procédé selon l'invention.

Une pièce en zircone ZrO2 pure est utilisée pour le procédé selon l'invention. On entend par zircone pure, un oxyde de zirconium ZrO2 allié à un oxyde d'yttrium, de calcium, de magnésium ou de scandium, destiné à stabiliser la zircone. Dans une variante du procédé, on pourrait employer un autre oxyde métallique, par exemple l'oxyde d'aluminium Al2O3. La pièce est, par exemple, une boîte de montre ou un maillon de bracelet. Sa surface est polie, mais dans une variante du procédé, elle pourrait être mate ou satinée.

La première étape du procédé consiste à effectuer un traitement plasma en surface de la pièce destiné à la nitrurer en surface. Pour cela, la pièce est placée dans une enceinte sous vide, à une température comprise entre 500°C et 900°C, et un gaz tel que de l'ammoniac NH3 ou un mélange d'hydrogène et d'azote est introduit. Un plasma est établi dans l'enceinte et la pièce est soumise à l'action du plasma pendant une durée déterminée. Sous l'effet du plasma, la pièce est totalement nitrurée en surface sur une épaisseur de l'ordre du micron et plus, c'est-à-dire qu'une couche externe de ZrN sensiblement stoechiométrique est formée. La surface prend une coloration dorée. La pièce en zircone est, en outre, réduite à coeur, c'est-à-dire sur l'ensemble de son volume. Un tel traitement est décrit en détail dans la demande EP 1 160 224. On notera que dans le cas où la pièce traitée est en oxyde d'aluminium, la couche externe formée est en nitrure d'aluminium AIN.

En variante du procédé, la première étape consiste en un traitement plasma destiné à carburer la pièce en surface. Le principe est similaire, mais le gaz utilisé est du méthane CH4. La surface est totalement carburée sur une épaisseur de l'ordre du micron et plus, c'est-à-dire qu'une couche externe de ZrC sensiblement stoechiométrique est formée. La surface prend une coloration métallique. De plus, la zircone est réduite à coeur. Un tel traitement est décrit en détail dans la demande EP 0 850 900. On notera que dans le cas où la pièce traitée est en oxyde d'aluminium, la couche externe formée est en carbure d'aluminium AIC.

La deuxième étape du procédé consiste à illuminer localement la surface ainsi traitée à l'aide d'un laser. Pour cela, la pièce est disposée sur un support, à la verticale d'un laser mobile dans un plan XY et dont le mouvement est contrôlé par un ordinateur. Le laser est de type Nd:YAG à impulsion, pompé optiquement, de longueur d'onde 1.06µm, de puissance optique 75W. Le laser est utilisé en mode Q-switched. La taille du spot est de 100µm, la fréquence des impulsions est de 80 à 100kHz, et leur largeur est de 100µs. La vitesse de balayage est de l'ordre de 10 à 20 mm/s. Un motif est choisi et converti, par un logiciel adapté, en une série de commandes de déplacement du laser. La surface de la pièce est ainsi balayée par le faisceau laser de façon à former le motif choisi.

Sous l'effet du rayonnement laser, et à condition d'apporter localement suffisamment d'énergie, la surface illuminée change de coloration. Le contraste de couleur créé entre les zones illuminées et les zones non illuminées, forme le motif choisi en surface de la pièce. Le changement de couleur résulte d'une modification de la stoechiométrie du nitrure ou du carbure situé en surface, accompagnée éventuellement d'une réoxydation partielle due à la présence d'oxygène dans l'atmosphère.

On notera que la présente invention n'est pas limitée à l'exemple de mise en oeuvre du procédé qui vient d'être décrit, et que diverses modifications et variantes simples peuvent être envisagées par l'homme du métier sans sortir du cadre de l'invention tel que défini par les revendications annexées.

## Revendications

1. Procédé de coloration locale d'une pièce en une céramique du type oxyde métallique, comportant principalement les étapes suivantes :
- se munir d'un support pour ladite pièce et d'un laser, dotés d'un mouvement relatif l'un par rapport à l'autre dans un plan XY.
- effectuer un traitement plasma de ladite pièce à l'aide d'un gaz contenant un élément choisi parmi l'azote et le carbone, de manière à transformer une couche superficielle de l'oxyde métallique, en une céramique sensiblement stoechiométrique choisie parmi les nitrures et les carbures métalliques,
- illuminer localement la pièce avec ledit faisceau laser de façon à apporter suffisamment d'énergie pour provoquer un changement local de coloration par modification de la stoechiométrie de ladite couche superficielle, et
- balayer la surface de la pièce à l'aide dudit faisceau laser de manière à former un motif déterminé.

2. Procédé selon la revendication 1, **caractérisé en ce que** ledit oxyde métallique est choisi parmi les oxydes de zirconium, et d'aluminium.

3. Procédé selon l'une des revendications 1 et 2, **caractérisé en ce que** ledit traitement plasma est effectué à l'aide d'un gaz contenant du carbone de manière à transformer une couche superficielle de l'oxyde métallique, en une céramique sensiblement stoechiométrique du type carbure métallique.

4. Procédé selon l'une des revendications 1 et 2, **caractérisé en ce que** ledit traitement plasma est effectué à l'aide d'un gaz contenant de l'azote de manière à transformer une couche superficielle de l'oxyde métallique, en une céramique sensiblement stoechiométrique du type nitrure métallique.

5. Procédé selon l'une des revendications 1 à 4, **caractérisé en ce que** ladite pièce est réduite à coeur.

## Claims

1. Method of locally colouring a part made of ceramic material of the metallic oxide type, mainly including the following steps:
- taking a support for said part and laser, able to move relative to each other in an XY plane,
- performing a plasma treatment of said part using a gas containing one element selected from among nitrogen and carbon, so as to convert a surface layer of metallic oxide, into a substantially stoichiometric ceramic chosen from among metal nitrides and carbides,
- illuminating the part locally with said laser beam in order to provide sufficient energy to cause a local change in colour by altering the stoichiometry of said surface layer, and
- scanning the surface of the part using said laser beam so as to form a determined pattern.

2. Method according to claim 1, **characterized in that** said metallic oxide is chosen from a among zirconium, aluminium and titanium oxides.

3. Method according to any of claims 1 and 2, **characterized in that** said plasma treatment is performed using a gas containing carbon so as to convert a surface layer of the metallic oxide into a substantially stoichiometric ceramic of the metal carbide type.

4. Method according to any of claims 1 and 2, **characterized in that** said plasma treatment is performed using a gas containing nitrogen so as to convert a surface layer of the metallic oxide into a substantially stoichiometric ceramic of the metal nitride type.

5. Method according to any of claims 1 to 4, **characterized in that** said part is reduced to the core.

## Patentansprüche

1. Verfahren zur lokalen Färbung eines Stückes aus einem keramischen Material von Typ eines Metaloxids, umfassend hauptsächlich die folgenden Schritte:
- sich mit einer Unterlage für das Stück und einem Lasergerät ausstatten, die sich mit einer Relativbewegung zueinander in einer XY Ebene bewegen,
- eine Plasmabehandlung des Stückes durchführen, mit einem Gas umfassend ein Element unter Stickstoff und Kohlenstoff ausgewählt, so dass eine oberflächliche Schichte des Metaloxids in eine im Wesentlichen stöchiometrische, unter Nitriden und Metalkarbiden gewählten, Keramik umgesetzt wird,
- das Stück lokal mit dem besagten Laserstrahl zu bestrahlen, so dass genug Energie mitgebracht wird, um eine lokale Änderung der Färbung durch die Änderung der Stöchiometrie der besagten oberflächlichen Schichte zu bewirken, und
- die Oberfläche des Stücks mit Hilfe des besagten Laserstrahls abtasten, um ein bestimmtes Muster zu bilden.

2. Verfahren gemäss Anspruch 1, **dadurch gekennzeichnet, dass** das besagte Metaloxid unter Zirkondioxid, Aluminium- und Titanoxid gewählt wird.

3. Verfahren gemäss einem der Ansprüche 1 oder 2, **dadurch gekennzeichnet, dass** die Plasmabehandlung mit einem Gas umfassend Kohlenstoff durchgeführt wird, so dass eine oberflächliche Schicht des Metaloxids in eine etwa stöchiometrische Metalkarbidkeramik umgesetzt wird.

4. Verfahren gemäss einem der Ansprüche 1 oder 2, **dadurch gekennzeichnet, dass** die Plasmabehandlung mit einem Gas umfassend Stickstoff durchgeführt wird, so dass eine oberflächliche Schichte des Metaloxiden in eine etwa stöchiometrische Nitridkeramik umgesetzt wird.

5. Verfahren gemäss einem der Ansprüche 1 bis 4, **dadurch gekennzeichnet, dass** das Stück auf einem Kern reduziert wird.
